# EUROPÄISCHE PATENTSCHRIFT

(11) **EP 0 450 174 B1**
(45) Veröffentlichungstag und Bekanntmachung des Hinweises auf die Patenterteilung: **12.10.1994**
(21) Anmeldenummer: 90124654.6
(22) Anmeldetag: 19.12.1990
(51) Int. Cl.: G01N 21/41, G01F 23/04

(54) **Vorrichtung zur optoelektrischen Trennschicht- und Brechzahlmessung in Flüssigkeiten**
Device for optoelectrically measuring interfacial level and refractive index of fluids
Dispositif de mesurage opto-électrique du niveau d'interface et de l'indice de réfraction dans des fluides

(30) Priorität: 05.04.1990 DE 4010948
(43) Veröffentlichungstag der Anmeldung: 09.10.1991
(73) Patentinhaber: Fibronix Sensoren GmbH, D-24143 Kiel (DE)
(72) Erfinder: Eisele, Ronald, Dipl.-Phys., W-2307 Dänisch-Nienhof (DE)
(74) Vertreter: Patentanwälte Westphal, Buchner, Mussgnug Neunert, Göhring

(56) Entgegenhaltungen:
- DE-A- 3 121 287
- DE-A- 3 247 192
- DE-A- 3 302 089

## Beschreibung

Die Erfindung bezieht sich auf eine Vorrichtung zur optoelektrischen Trennschicht- und Brechzahlmessung in Flüssigkeiten der im Oberbegriff des Hauptanspruchs angegebenen Art.

Solche Trennschicht- und Brechzahlmeß- bzw. Anzeigevorrichtungen werden beispielsweise zur Füllstandsmessung oder Kontrolle der Flüssigkeitengrenzschicht zweier nicht mischbarer Flüssigkeiten unterschiedlicher Dichte in explosionsgefährdeten Tanks, z.B. Flüssiggastanks, oder Behältern mit Lösungsmitteln oder dergleichen, eingesetzt, wobei die Lage einer Flüssigkeitengrenzschicht aus der Brechzahländerung beim Übergang zwischen den Flüssigkeiten bestimmt wird. In diesem Fall müssen sich elektrische oder elektronische Steuereinrichtungen außerhalb des explosionsgefährdeten Bereichs befinden. Das den Flüssigkeitsspiegel kontrollierende Signal wird darum in dem explosionsgefährdeten Bereich ausschließlich mit optischen Mitteln erzeugt, übertragen und moduliert, während die elektrische Auswertung an einem vom Flüssigkeitsbehälter entfernten Ort durchgeführt wird.

Diese Trennschicht- oder Brechzahlanzeige- oder Meßvorrichtungen weisen einen oberhalb des Flüssigkeitsspiegels angeordneten Sensor auf, dem Licht aus wenigstens einer Lichtquelle über Lichtwellenleiter zugeführt wird und dessen Grenzfläche, solange diese außerhalb des flüssigen Mediums gelegen ist, das eingekoppelte Licht aufgrund von Totalreflexion zum Teil reflektiert. Das reflektierte Licht wird wiederum über einen Lichtwellenleiter einem Lichtdetektor zugeleitet. Kommt dagegen der Sensorkörper, der aus transparentem Glas oder Kunststoff besteht, mit dem Flüssigkeitsspiegel in Berührung, so wird ein Teil des auf die Grenzfläche auftreffenden Lichtes wegen Unterschreitung des Totalreflexionswinkels in Abhängigkeit vom Brechungsindex des Mediums in die Flüssigkeit ausgekoppelt und nur noch ein geringerer Teil dem Lichtdetektor zugeführt.

Aus der Offenlegungsschrift DE 33 02 089 A1 ist eine hierfür geeignete Anordnung bekannt, bei welcher das Licht durch Multimodelichtleitfasern mittels innerer Totalreflexion geführt wird.

Ein entscheidender Nachteil dieser Anordnung besteht darin, daß der Signalhub, also die Signaldifferenz, zwischen dem Meßwert bei unbenetztem Sensor und demjenigen bei benetztem vergleichsweise gering ist. Das rührt daher, daß ein nicht unwesentlicher Teil der im Lichtwellenleiter geführten Lichtmoden, die ja mehrfach an der Innenwand des Lichtleiters reflektiert werden, schon bei Luftkontakt wegen Unterschreiten des Totalreflexionswinkels aus der Grenzfläche austritt. Auch wenn der Sensorkörper von der Flüssigkeit benetzt ist, ist mit störenden und den Signalhub verringernden Reflexionen zu rechnen, was zu einer starken Reduzierung der erzielbaren Empfindlichkeit (Brechzahlunterschied zur Flüssigkeit /Intensitätsänderung der Reflexion) führt.

Der vorliegenden Erfindung liegt die Aufgabe zugrunde, eine insbesondere zur Überwachung explosionsgefährdeter Flüssigkeiten geeignete optoelektrische Vorrichtung der im Oberbegriff angegebenen Art zu schaffen, welche bei Meidung der genannten Nachteile einen möglichst großen Signalhub gewährleistet.

Gelöst wird diese Aufgabe mit den gemäß Anspruch 1 gekennzeichneten Merkmalen.

Die Grundidee der Erfindung besteht darin, das an den Sensorkörper über Lichtwellenleiter herangeführte Licht mittels eine Plankonvexlinse parallel zu richten, es über ein kreiszylindrisches Element ohne wesentliche Reflexion an der Zylinderwand einer kegelförmigen an der Spitze in Kappenform gerundeten Grenzfläche zuzuführen, an welcher es im Falle der Teil- oder Totalreflexion umgelenkt und wiederum parallel zur Zylinderwandung zur Plankonvexlinse zurückgeführt wird. Diese fokussiert das parallel gerichtete Licht auf den rückleitenden Lichtwellenleiter, der das eingekoppelte Licht, von Reflexions- und Streuverlusten abgesehen, weitgehend ungedämpft dem Lichtdetektor zuführt. Wird dagegen die kegelförmige Grenzfläche mit einer Flüssigkeit benetzt, z.B. vom Flüssigkeitsspiegel der zu kontrollierenden Flüssigkeit erreicht, so tritt ein bestimmter Anteil des Lichtes durch die Grenzfläche in das flüssige Medium, so daß nur ein ganz bestimmter Teil den Lichtdetektor erreicht. Dabei bestimmt der Brechzahlunterschied zwischen dem Sensorkörper und dem Medium den Totalreflektionswinkel und damit den Flächenanteil der als abgerundete Kappe ausgeformten Sensorspitze, in dem Totalreflektion stattfindet. Damit wird nur ein Teil des auf die gesamte Sensorkörperspitzeinnenfläche auftreffenden Lichtes zurückreflektiert. Dieser Lichtanteil ist direkt proportional zum Brechzahlunterschied zwischen Medium und Flüssigkeit. Eine quantitative Auswertung des totalreflektierten Lichtanteils ermöglicht somit die Brechzahlbestimmung der die Sensorkörperspitze benetzenden Flüssigkeit und die Verwendung als Refraktometer.

Weitere konstruktive Merkmale sind Gegenstand der Unteransprüche 2 bis 6.

So kann der Sensorkörper mit Plankonvexlinse und Kreiskegel einstückig aus transparentem Glas oder Kunststoff bestehen. Die Lichtzuführung und -abführung kann entweder über gesonderte Lichtwellenleiter (vgl. Anspruch 3) oder über die Y-förmig verzweigenden Lichtwellenleiter (Anspruch 4) erfolgen.

Bei Verwendung des erfindungsgemäßen Vorschlages zur Trennschicht- und Brechzahlanzeige in explosionsgefährdeter Umgebung können die Vorschriften für Flammendurchschlagsicherheit in sehr einfacher Weise durch entsprechende Längenbemessung des zylindrischen Elementes des Sensorkörpers erfüllt werden, wie mit Anspruch 5 angegeben ist. Komplizierte und damit kostspielige Lösungen (vgl. hierzu DE-GM 79 08 489) für die Faserbündeldurchführung lassen sich hierbei dadurch vermeiden, daß die Lichtleitfasern auf der drucklosen Behälterseite mit dem Sensorkörper verbunden sind.

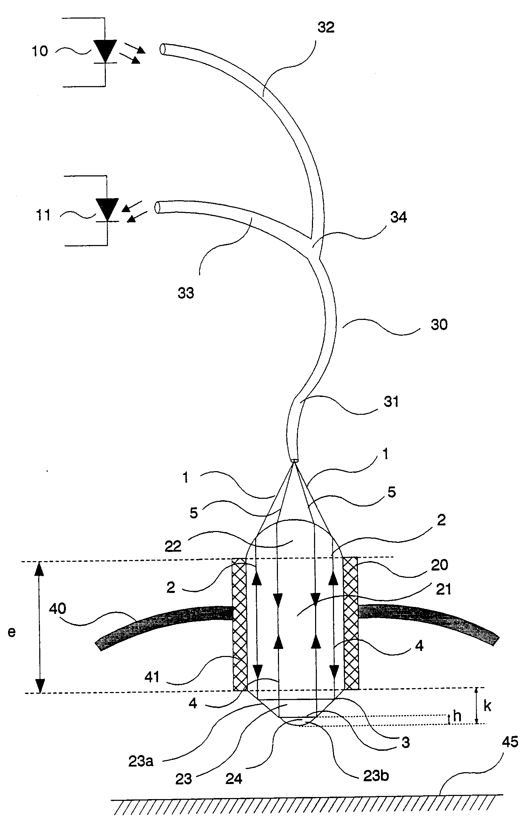

Der Gegenstand der Erfindung ist nachstehend anhand eines Ausführungsbeispieles erläutert, das in schematischer Weise in der Zeichnung dargestellt ist.

Bei diesem Ausführungsbeispiel wird mit der erfindungsgemäßen Vorrichtung die Trennschicht von Flüssigkeitsspiegeln 45 einzelner, nicht mischbarer und durch ihre physikalische Dichte bestimmte Schichtung überwacht.

Diesem Zweck dient der Sensorkörper 20, welcher mit seinem kreiszylindrischen Mittelteil 21 die Wand 40 eines im einzelnen nicht dargestellten Behälters durchsetzt und gegenüber dieser mit einer schematisch angedeuteten Dichtung 41 flüssig- und gasdicht abgedichtet ist. Das in dem Sensorkörper 20 ein- und auszukoppelnde Licht 1, 5 wird über Lichtwellenleiter 31 bis 33 zu- bzw. abgeleitet.

Als Lichtquelle ist beispielsweise eine Leuchtdiode 10 oder ein anderes Licht emittierende Halbleiter-Bauelement, als Lichtdetektor eine Fotodiode 11 oder dergleichen Lichtempfänger vorgesehen. Das von der Leuchtdiode 10 erzeugte Licht wird über den Senderlichtwellenleiter 32 und eine Verzweigung 34 dem gemeinsamen Lichtwellenleiter 31 zugeführt, aus dessen Ende das noch ungerichtete Licht 1 austritt. Dieses Licht 1 wird mittels einer Plankonvexlinse 22 parallel gerichtet, wie mit den Strahlen 2 angedeutet ist, und in dieser Form durch das kreiszylindrische Element 21 des Sensorkörpers 20 ohne wesentliche Reflexionen an den Zylinderwänden weitergeleitet. Die dem Flüssigkeitsspiegel 45 zugewandte Seite des Sensorkörpers 20 ist in Form eines Kreiskegels 23, mit einer Kreiskegelhöhe k, der mit einer abgerundeten Kappe 24, mit einer Kappenhöhe h, die z.B. die Form einer Kugelkalotte aufweist, endseitig abgeschlossen ist, ausgebildet, dessen Mantelfläche 23a die Grenzfläche bildet. Die Krümmung der Kappe 24 ist so bemessen, daß in Umgebung von Luft oder einer vergleichbaren gasförmigen Atmosphäre ein großer Anteil des parallel gerichteten Lichts 2 an der Grenzfläche 23a in Richtung der Lichtstrahlen 3 und 4 totalreflektiert wird, so daß es wiederum parallelgerichtet zur Plankonvexlinse 22 rückgeführt wird. Diese bündelt das austretende Licht in Richtung der Strahlen 5, so daß das reflektierte Licht über den gemeinsamen Leiter 31 und nach Passieren der Verzweigung 34 dem Empfängerlichtleiter 33 zugeführt und von diesem zur Licht empfangenden Fotodiode 11 mit nur geringem Verlust geleitet wird. Selbstverständlich ist der Strahlengang mit den Pfeilen 1 bis 5 stark schematisiert, wobei die in den Strahlengang eingezeichneten Pfeile je nach Lichtein- und -austritt auch umgekehrt gerichtet sein können.

Wird die Grenzfläche 23a dagegen von der Flüssgkeit benetzt, taucht sie z.B. ganz oder teilweise in den angestiegenen Flüssigkeitsspiegel 45 ein, so tritt das parallelgerichtete Licht 2 in einem Umfang aus, der durch den Brechzahlunterschied zwischen Sensorkörper und Medium bestimmt wird, so daß nur ein ganz bestimmter Anteil des Lichtes in Richtung der Pfeile 4 zurückgeleitet wird. Zu der als Lichtdetektor wirkenden Fotodiode 11 gelangt ein Anteil Licht, der zum Unterscheiden von verschiedenen Brechzahlen geeignet ist.

## Patentansprüche

1. Vorrichtung zur optoelektrischen Trennschicht- und Brechzahlmessung in Flüssigkeiten mit einem transparenten Sensorkörper mit einer eingekoppeltes Licht je nach umgebenden Medium ganz oder teilweise reflektierenden Grenzfläche, der mit mindestens einer Lichtquelle und einem Lichtdetektor über Lichtwellenleiter verbunden ist, dadurch gekennzeichnet, daß der Sensorkörper (20) einstückig aus einem Kreiszylinderteil und einem an dessen Stirnfläche angebrachten Kreiskegelteil (23) besteht, wobei der Kreiszylinderteil mit dem Lichtwellenleiter über eine das eingekoppelte Licht (1) parallel richtende und das ausgekoppelte, reflektierte Licht (4) fokussierende Plankonvexlinse (22) verbunden ist und wobei die dem Flüssigkeitsspiegel zugewandte Seite von der Mantelfläche des Kreiskegelteils (23), mit einer Kreiskegelhöhe (k), mit abgerundeter Spitze (23b), die eine Kappenhöhe (h) aufweist, gebildet ist.

2. Vorrichtung nach Anspruch 1, dadurch gekennzeichnet, daß der Sensorkörper (20) mit Plankonvexlinse (22) und Kreiskegel (23) einstückig ist und aus transparentem Glas oder Kunststoff besteht.

3. Vorrichtung nach Anspruch 1 oder 2, dadurch gekennzeichnet, daß die Plankonvexlinse (22) mit der Lichtquelle (10) und dem Lichtdetektor (11) jeweils über mindestens einen Lichtwellenleiter verbunden ist.

4. Vorrichtung nach Anspruch 1 oder 2, dadurch gekennzeichnet, daß die Plankonvexlinse (22) mit der Lichtquelle (10) und dem Lichtdetektor (11) über sich Y-förmig verzweigende Lichtwellenleiter (31 - 33) verbunden ist.

5. Vorrichtung nach einem der Ansprüche 1 bis 4 zur Füllstandsanzeige in explosionsgefährderter Umgebung, dadurch gekennzeichnet, daß der Kreiszylinder (21) des Sensorkörpers (20) die Wandung (40) eines eine feuergefährdete Flüssigkeit enthaltenen Behälters durchdringt, gegenüber dieser abgedichtet ist und eine für Flammendurchschlag-Sicherheit vorgeschriebene Mindestlänge (1) aufweist.

6. Vorrichtung nach Anspruch 1 oder 2, dadurch gekennzeichnet, daß die Kappenhöhe (h) ein Drittel der gesamten Kreiskegelhöhe (k) beträgt.

## Claims

1. An apparatus for the optoelectronic measurement of the interfacial level and index of refraction in liquids, having a transparent sensor body with an interface completely or partially reflecting converging light depending on the surrounding medium, said body being connected to at least one light source and a light detector via optical waveguides,
**characterised in that** the sensor body (20) consists in one piece of a circular cylindrical part and a circular conical part (23) mounted on its end face, the circular cylindrical part also being connected to the optical waveguide via a plano-convex lens (22) which directs the converging light (1) parallel and focuses the diverging, reflected light (4) and the side close to the liquid level also being formed by the shell surface of the circular conical part (23), having a circular cone height (k), with a rounded point (23b), which has a cap height (h).

2. An apparatus according to Claim 1,
**characterised in that** the sensor body (20) is in one piece with the plano-convex lens (22) and circular cone (23) and is made from transparent glass or plastic.

3. An apparatus according to Claim 1 or 2,
**characterised in that** the plano-convex lens (22) is connected to the light source (10) and the light detector (11) via at least one optical waveguide.

4. An apparatus according to Claim 1 or 2,
**characterised in that** the plano-convex lens (22) is connected to the light source (10) and the light detector (11) via optical waveguide (31 - 33) branching in a Y-shape.

5. An apparatus according to one of Claims 1 to 4 for indicating the level in a potentially explosive environment,
**characterised in that** the circular cylinder (21) of the sensor body (20) penetrates the wall (40) of a container containing a highly flammable fluid, is sealed therefrom and has a minimum length (1) prescribed for protection against flashback.

6. An apparatus according to Claim 1 or 2,
**characterised in that** the cap height (h) is one third of the total circular cone height (k).

## Revendications

1. Dispositif optronique servant à déterminer la couche de séparation et l'indice de réfraction dans des liguides, comportant un capteur à corps transparent dont la surface constitue un dioptre réfléchissant en fonction du milieu environnant, tout ou partie d'une lumière émise par au moins une source lumineuse, ainsi qu'un détecteur de lumière relié au capteur par un conducteur d'ondes optiques, caractérisé en ce que le corps (20) du capteur est un bloc comportant une partie cylindrique circulaire (21) prolongée par une partie conique circulaire (23), la partie cylindrique (21) est reliée au conducteur d'ondes par une lentille plan-convexe (22) transformant en faisceaux parallèles la lumière entrant (1) ainsi que la lumière (4) faisant retour par réflexion, tandis que la paroi de la partie conique (23) de hauteur (K) située en regard de la surface du liquide est terminée par une calotte sphérique (23b) de hauteur (h).

2. Dispositif selon la revendication 1, caractérisé en ce que le corps (20) du capteur inclut la lentille plan-convexe (22) et le cône circulaire (23) est réalisée en verre ou en matière plastique transparente.

3. Dispositif selon la revendication 1 ou 2, caractérisé en ce que la lentille plan-convexe (22) est reliée à la source lumineuse (10) ainsi qu'au détecteur de lumière (11) respectivement par au moins un conducteur d'ondes lumineuses.

4. Dispositif selon la revendication 1 ou 2, caractérisé en ce que la lentille plan-convexe (22) est reliée à la source lumineuse (10) et au détecteur de lumière (11) par un conducteur d'ondes lumineuses (31 - 33) à embranchement en Y.

5. Dispositif selon une des revendications 1 à 4, destiné à servir d'indicateur de niveau de remplissage dans une ambiance présentant des risques d'explosion, caractérisé en ce que le cylindre circulaire (21) constituant le corps (20) du capteur est monté en traversée de la paroi (40) d'un récipient contenant le liquide à risque, avec étanchéité par rapport à cette paroi et présente la longueur minimale (1) exigée par les prescriptions relatives à la sécurité antidéflagrante.

6. Dispositif selon la revendication 1 ou 2, caractérisé en ce que la hauteur (h) de la calotte sphérique est le tiers de la hauteur (k) du cône circulaire.
